# EUROPEAN PATENT APPLICATION

(11) **EP 4 510 339 A1**
(43) Date of publication of application: **19.02.2025**
(21) Application number: 23898339.9
(22) Date of filing: 30.11.2023
(51) Int. Cl.: H01M 50/264, H01M 50/291, H01M 50/517, H01M 50/258, H01M 50/242, H01M 50/262, H01M 50/211

(54) **CELL STACK ASSEMBLY AND BATTERY PACK COMPRISING CELL STACK ASSEMBLY**

(30) Priority: 02.12.2022 KR 20220167130; 22.03.2023 KR 20230037378
(71) Applicant: LG Energy Solution, Ltd., Seoul 07335 (KR)
(72) Inventor: JEON, Jong Pil, Daejeon 34122 (KR); KIM, Min Bum, Daejeon 34122 (KR); SHIN, Ju Hwan, Daejeon 34122 (KR); SEONG, Jun Yeob, Daejeon 34122 (KR); LEE, Hyoung Suk, Daejeon 34122 (KR)
(74) Representative: Plasseraud IP
(86) International application number: PCT/KR2023/019564
(87) International publication number: WO 2024/117815

(57) **Abstract**

The present technology relates to a cell stack assembly and a battery pack including the same. More specifically, the cell stack assembly of the present invention includes a cell stack having a plurality of cells stacked with electrode leads extending from both sides thereof; a busbar frame including a busbar electrically connected with each of the electrode leads, and attached to a front and rear surface of the cell stack, respectively; a first side beam coupled to one side end of the busbar frame to support one side surface of the cell stack; and a second side beam coupled to other side end of the busbar frame to support one side surface of the cell stack; wherein the first side beam comprises a supporting part supporting one side of the cell stack; and a plate-shaped pressing part formed at an end of the supporting part and perpendicular to the supporting part. The battery pack of the present technology accommodating the cell stack assembly including a pack case providing a space in which the cell stack assembly is seated; and a pair of cell stack assemblies disposed adjacent to each other, characterized in that a first side beam of one of the cell stack assemblies is seated in the pack case such that a second side beam of the other of the cell stack assemblies is coupled to the first side beam.

## Description

### [Technical Field]

The present invention relates to a cell stack assembly and a battery pack including the cell stack assembly. More specifically, the present invention provides a cell stack assembly having a side beam structure shaped to press an upper portion of a plurality of cells included therein, and a battery pack having improved supporting force of the cell stack assembly accommodated by the side beam structure.

This application claims the benefit of priority based on Korean Patent Application No. 10-2022-0167130, filed on December 02, 2022, and Korean Patent Application No. 10-2023-0037378, filed on March 22, 2023, and the entire contents of the Korean patent application are incorporated herein by reference.

### [Background Art]

The types of secondary batteries include lithium ion batteries, lithium polymer batteries, nickel cadmium batteries, nickel hydrogen batteries, nickel zinc batteries, and the like. The operating voltage of such a unit secondary battery cell, in other words, a unit battery cell, is about 2.5V to 4.2V. Therefore, if a higher output voltage is required, a plurality of battery cells may be connected in series to form a battery pack. Also, depending on the charge and discharge capacity required for the battery pack, a plurality of battery cells may be connected in parallel to form a battery pack. Accordingly, the number of battery cells included in the above battery pack may be varied according to the required output voltage or charge/discharge capacity.

For example, when a plurality of battery cells is connected in series/parallel to form a battery pack, a battery module comprising a plurality of battery cells is first constructed.

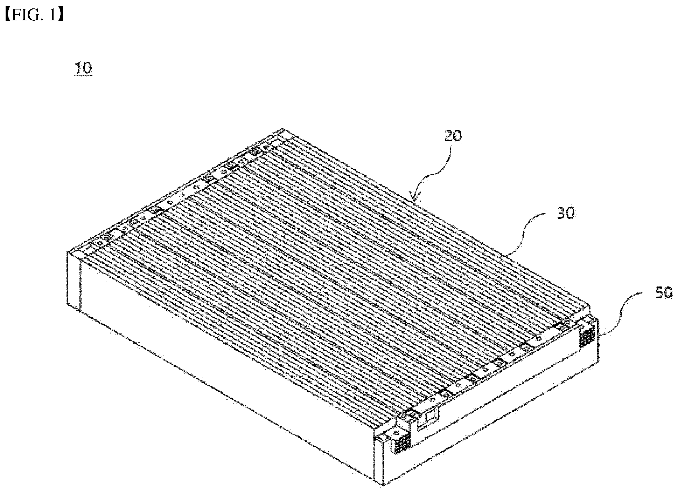

FIG. 1 illustrates an example of one of the conventional battery modules, and is a perspective view of a cell stack assembly 10 in which the cells 30 are exposed to the outside. Specifically, the cell stack assembly 10 shown in FIG. 1 comprises a busbar frame 50 having electrode leads extending from both sides and covering the electrode leads in front of and in rear of a plurality of cells 30 stacked in one direction.

The form as shown in FIG. 1 has the advantage of being lighter in weight compared to conventional battery modules in which the module frame that encloses and protects the cells 30 inside is omitted.

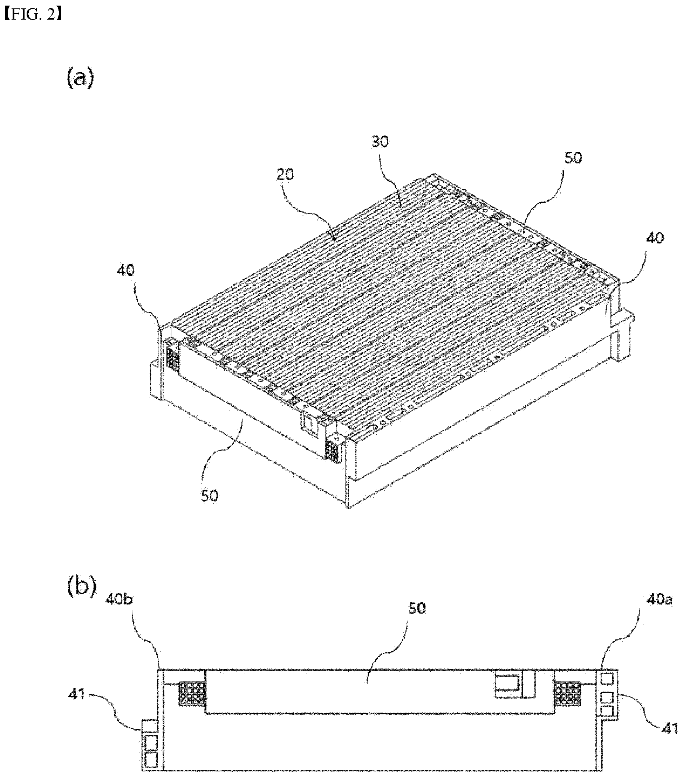

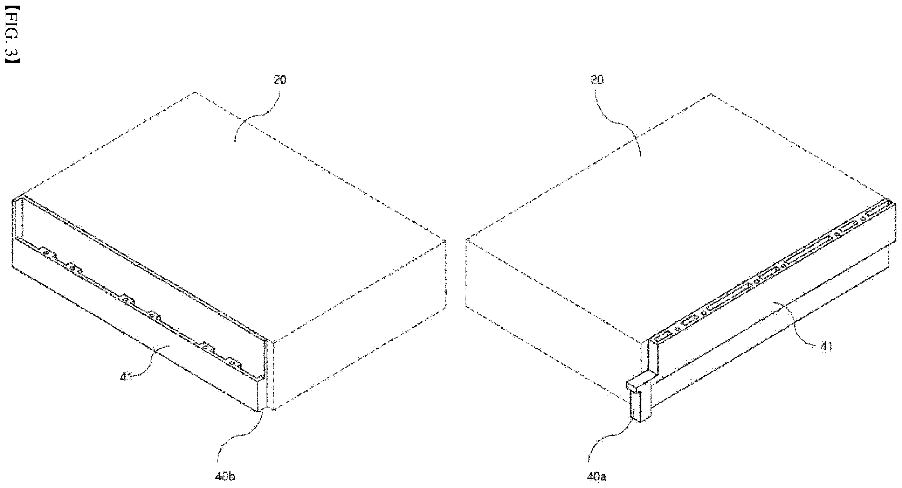

FIG. 2 is a perspective and front view of a conventional cell stack assembly 10 having side beams 40 coupled on each side to support the sides of the cell stack 20, and FIG. 3 is a drawing of the shape of the side beams 40 coupled on each side of FIG. 2.

The cell stack assembly 10 of FIG. 2(a) is characterized in that side beams 40 are applied to improve the lateral supporting force of the cell stack assembly 10. The pair of side beams 40 are formed with protrusion parts 41 at their upper and lower ends, respectively, as shown in FIG. 2(b), wherein the protrusion parts 41 are formed with steps such that they have an engaging shape. Specifically, the side beams 40 comprise a first side beam 40a with the protrusion part 41 formed on the upper side and a second side beam 40b with the protrusion part 41 formed on the lower side on one side of the cell stack 20, as shown in FIG. 3.

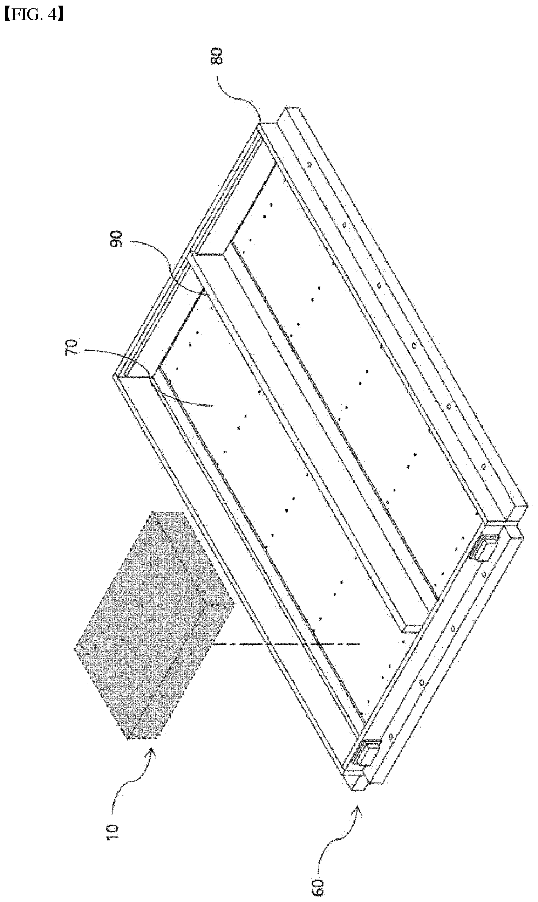

FIG. 4 illustrates a pack case 60 in which the cell stack assembly 10 of FIG. 2 is accommodated, wherein a base plate 70, a side wall 80, and a main wall 90 support the lower and side portions of the cell stack assembly 10, respectively. The pack case 60 in which the cell stack assemblies 10 in the form shown in FIG. 2 are accommodated has the advantage that the side walls 80 and the main wall 90 are combined with each other to separate the cell stack assemblies 10, and that a separate separation wall or the like for dividing the inner space is not required.

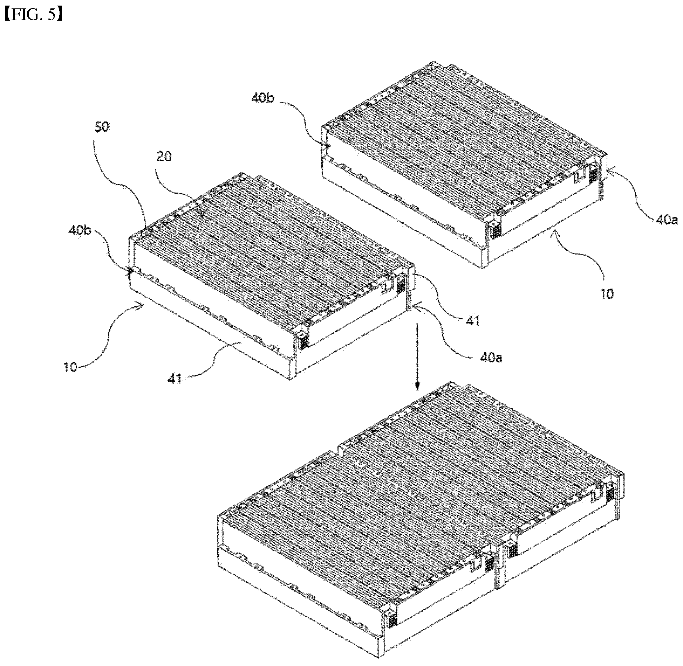

FIG. 5 illustrates a pair of cell stack assemblies 10 accommodated in the inner space of the pack case 60 of FIG. 4. The pair of neighboring cell stack assemblies 10, as shown in FIG. 5, are engaged and coupled with each other by a first side beam 40a and a second side beam 40b provided at a side portion of each cell stack assembly 10.

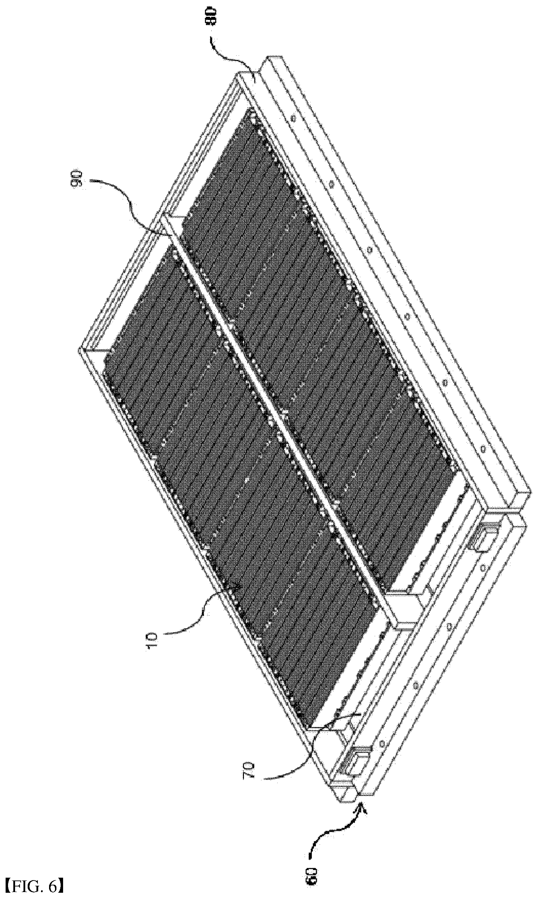

FIG. 6 illustrates a pack case 60 filled entirely with cell stack assemblies 10, wherein each of the cell stack assemblies 10 is coupled to each other through the side beams 40 of the side portions. Here, the coupled first side beam 40a and second side beam 40b take the place of a conventional separation wall.

As shown in FIGS. 1 to 6 above, the cell stack assembly 10 with the module frame omitted has the advantage of being lightweight but has the disadvantage of having an exposed cell 30, which provides a weak supporting force on top of the cell stack 20.

### [Disclosure]

### [Technical Problem]

The present invention is therefore directed to solving the above problems, and to provide a cell stack assembly with improved upper portion supporting force, and a battery pack including the same.

Other objects and advantages of the present invention will be understood from the following description, which will become more apparent from the embodiments of the present invention, and it will be easily understood that the objects and advantages of the present invention may be realized by the means and combinations thereof disclosed in the claims of the patent.

### [Technical Solution]

The present invention provides a cell stack having a plurality of cells stacked with electrode leads extending from both sides thereof; a busbar frame including a busbar electrically connected with each of the electrode leads, and attached to a front and rear surface of the cell stack, respectively; a first side beam coupled to one side end of the busbar frame to support one side surface of the cell stack; and a second side beam coupled to other side end of the busbar frame to support one side surface of the cell stack; wherein the first side beam comprises a supporting part supporting side portion of the cell stack; and a plate-shaped pressing part formed at an end of the supporting part and perpendicular to the supporting part.

The pressing part is formed on the top of the supporting part, and the cross-section of the first side beam may have a 'T' shape.

The pressing part may be formed at an end of the supporting part in a shape that protrudes to both sides of the supporting part.

The pressing part may be formed extending along a length direction of the first side beam.

The first side beam and the second side beam may include protrusion parts projecting to form a step along the height direction of the cell stack.

The protrusion part may include an upper protrusion part formed on an upper portion of the first side beam; and a lower protrusion part formed on a lower portion of the second side beam.

The first side beam and the second side beam may have a shape such that the upper protrusion part and the lower protrusion part are engaged and coupled with each other.

A buffer pad may be attached to the bottom of the pressing part of the first side beam.

The present invention provides a battery pack, including a pack case providing a space in which the cell stack assembly is seated; and a pair of cell stack assemblies disposed adjacent to each other, characterized in that a first side beam of one of the cell stack assemblies is seated in the pack case such that a second side beam of the other of the cell stack assemblies is coupled to the first side beam.

A pressing part of the first side beam included in the pair of cell stack assemblies may support a pair of cell stack upper portion located on each side of the first side beam.

The pressing part may be formed on a top of the supporting part with protrusions on both sides of the supporting part, the pressing part may press the upper portion of a cell stack included in the cell stack assembly including the supporting part with a protrusion on one side of the supporting part, and the pressing part may press the upper portion of a cell stack included in another cell stack assembly disposed adjacent to the supporting part with a protrusion on the other side of the supporting part.

The pressing part included in one of the cell stack assemblies of the pair of neighboring disposed cell stack assemblies may be screwed to a busbar frame included in the other cell stack assembly.

The first side beam and the second side beam may include coupling holes formed to pass through the protrusion part in a vertical direction, and any pair of neighboring cell stack assemblies may be coupled such that the locations of the coupling holes included in the first side beam of one cell stack assembly and the coupling holes included in the second side beam of the other cell stack assembly are matched.

The coupled pair of cell stack assemblies may be screwed by a coupling member through the coupling holes in the first side beam and the second side beam coupled to the first side beam.

### [Advantageous Effects]

The present invention can provide a battery pack having improved energy efficiency by reducing weight.

Further, according to the present invention, it is possible to provide a cell stack assembly and a battery pack including the cell stack assembly having increased safety by improving the upper portion supporting force.

### [Brief Description of the Drawings]

FIG. 1 illustrates an example of one of the conventional battery modules.
FIG. 2 illustrates a conventional cell stack assembly with side beams.
FIG. 3 is a perspective view of the side beams.
FIG. 4 illustrates a pack case in which the cell stack assembly of FIG. 2 is accommodated.
FIG. 5 illustrates a pair of cell stack assemblies accommodated in the inner space of the pack case of FIG. 4.
FIG. 6 is a pack case illustrating an entirely filled cell stack assembly.
FIG. 7 is a perspective view of a cell stack assembly of the present invention.
FIG. 8 is a front view of the cell stack assembly.
FIG. 9 is a perspective view of a battery pack according to a first embodiment of the present invention.
FIG. 10 is a cut-away sectional view of a portion of the pack case of FIG. 9.
FIG. 11 is an illustration of the coupling of a pair of neighboring cell stack assemblies in the pack case of FIG. 9.
FIG. 12 is a front view of one of the cell stack assemblies coupled in FIG. 11.
FIG. 13 is a perspective view of a pair of cell stack assemblies neighborly accommodated in a battery pack according to a second embodiment of the present invention.
FIG. 14 is a front view of the cell stack assembly of FIG. 13.
FIG. 15 is a modified example of the cell stack assembly of FIG. 13.
FIG. 16 is a perspective view of a pair of cell stack assemblies included in a battery pack according to a third embodiment of the present invention.
FIG. 17 is a front view of a cell stack assembly included in a battery pack according to a fourth embodiment of the present invention.
FIG. 18 is a front view of a pair of cell stack assemblies coupled to each other.

### [Best Mode]

The present invention will now be described in detail with reference to the accompanying drawings, which illustrate preferred embodiments of the present invention. It is hereby understood that the terms and words used in this specification and claims are not to be construed in their ordinary or dictionary sense, but are to be interpreted with a meaning and concept consistent with the technical idea of the present invention, based on the principle that the inventor may define the concept of a term as he or she considers appropriate to best describe the invention.

However, it should be understood that the present invention is not limited to the specific embodiments, and includes all modifications, equivalents, or alternatives within the spirit and technical scope of the present invention.

In addition, in describing the present invention, specific descriptions of related disclosed configurations or functions are omitted where it is considered that such detailed description would obscure the subject matter of the present invention.

The present invention is shown in embodiment to more fully explain the present invention to those of ordinary skill in the art, and therefore, the shapes and sizes of the components in the drawings may be exaggerated, omitted, or shown schematically for clarity. Accordingly, the size or proportions of each component are not necessarily indicative of its actual size or proportions.

The present invention relates to a cell stack assembly and a battery pack including the cell stack assembly. More specifically, the present invention provides a cell stack assembly having a side beam structure shaped to press against a top of a plurality of cells included therein, and a battery pack having an increased supporting force of the cell stack assembly accommodated by the side beam structure.

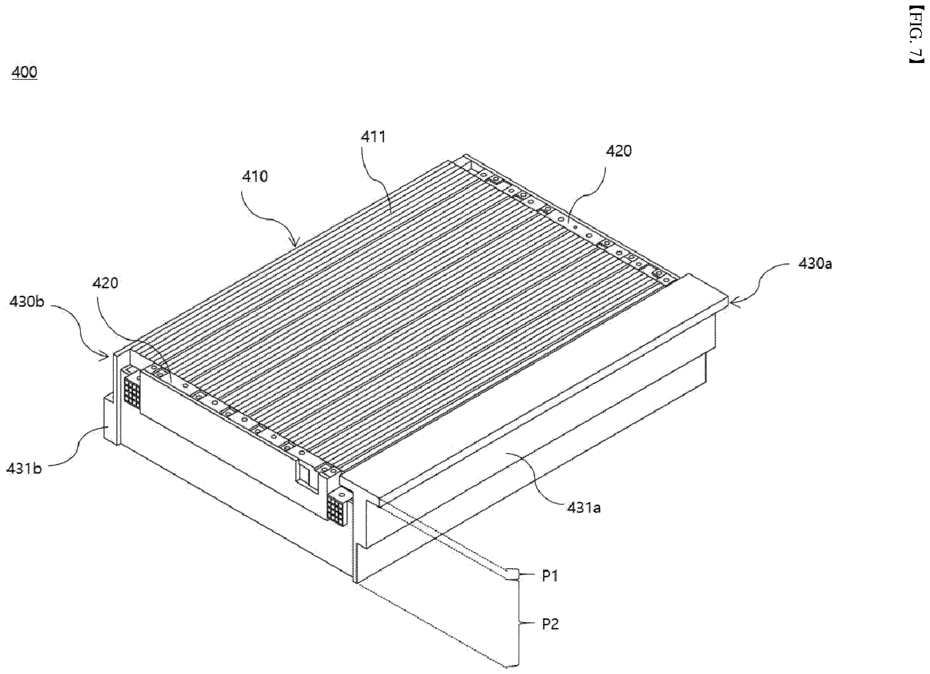

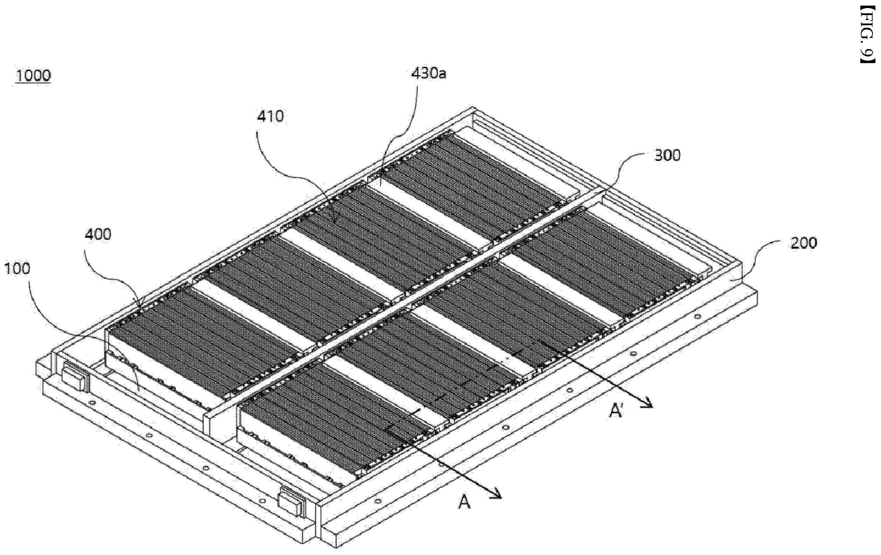

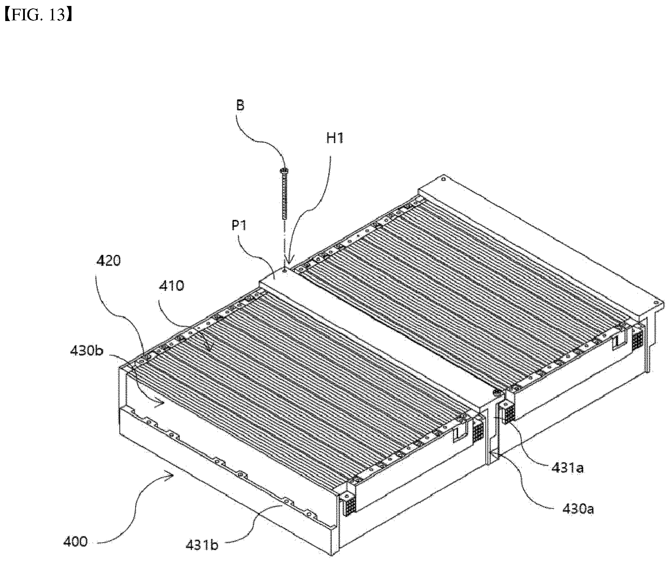

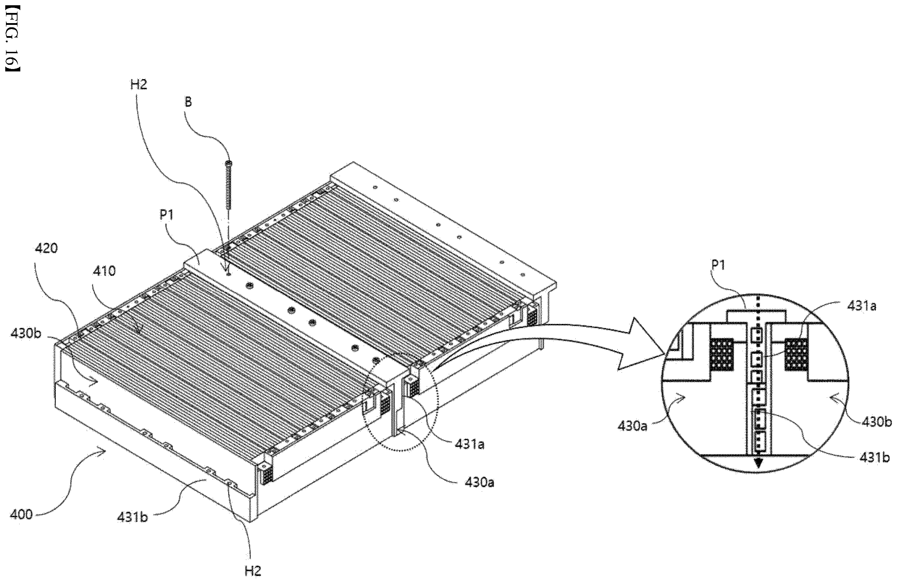

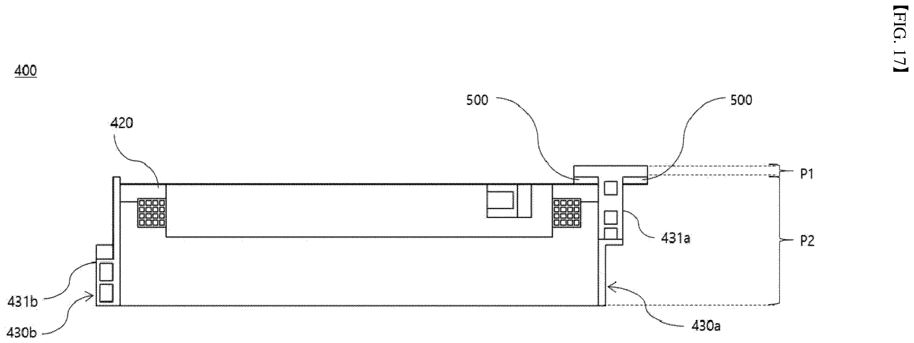

FIGS. 7 to 8 relate to a cell stack assembly of the present invention, FIGS. 9 to 12 relate to a battery pack according to a first embodiment of the present invention, FIGS. 13 to 15 relate to a battery pack according to a second embodiment of the present invention, FIG. 16 relate to a battery pack according to a third embodiment of the present invention, and FIGS. 17 to 18 relate to a battery pack according to a fourth embodiment of the present invention.

Hereinafter, the cell stack assembly and battery pack of the present invention will be described with reference to FIGS. 7 to 17.

### Cell Stack Assembly 400

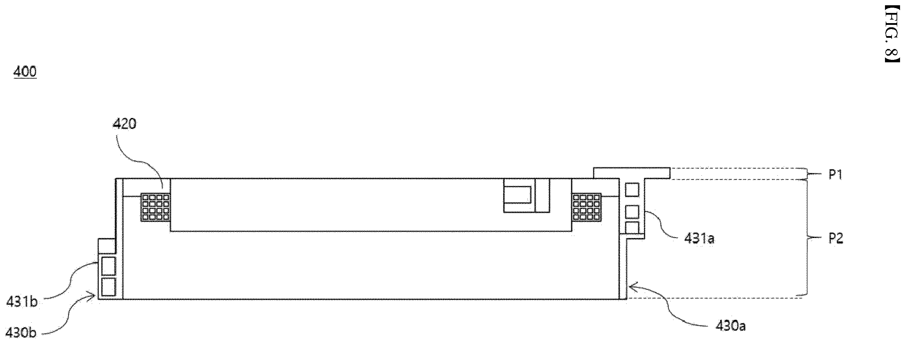

FIG. 7 is a perspective view of a cell stack assembly 400 of the present invention, and FIG. 8 is a front view of the cell stack assembly 400.

The cell stack assembly 400 includes a cell stack 410 having a plurality of cells 411 stacked therein, a busbar frame 420 coupled to a front and rear surface of the cell stack 410, and a pair of side beams 430a, 430b coupled to two sides of the cell stack 410, respectively.

The cell stack 410 comprises a plurality of cells 411 from which electrode leads (not shown) are derived on both sides. More specifically, the cell stack 410 comprises a plurality of cells 411 stacked in one direction.

The cell stack 410 includes a busbar (not shown) electrically connected to each electrode lead of the cell stack 410, wherein the busbar frame 420 is coupled to a front and rear side of the cell stack 410, respectively, to cover the electrode leads.

The cell stack 410 includes the side beams 430a, 430b, including a first side beam 430a coupled to one side of the cell stack 410 and a second side beam 430b coupled to the other side of the cell stack 410. More specifically, the first side beam 430a is coupled to one side end of the busbar frame 420 to support one side surface of the cell stack 410, and the second side beam 430b is coupled to the other side end of the busbar frame 420 to support the other side surface of the cell stack 410.

The cell stack assembly 400 of the present invention has a shape in which the first side beam 430a presses an upper portion of the cell stack 410. Specifically, the first side beam 430a is characterized in that the first side beam 430a comprises a supporting part P2 for supporting a side portion of the cell stack 410 and a pressing part P1 for pressing the upper portion of the cell stack 410.

The cell stack 410 is characterized in that the first side beam 430a comprises a supporting part P2 supporting one side of the cell stack 410, as shown in Figures 7 and 8, and a plate-shaped pressing part P1 formed at an end of the supporting part P2 and perpendicular to the supporting part P2.

The pressing part P1 is formed on the top of the supporting part P2.

The cross-section of the first side beam 430a comprising the supporting part P2 and the pressing part P1 coupled to the top of the supporting part P2 has a 'T' shape as shown, in other words, the pressing part P1 is formed at the end of the supporting part P2 in a shape that protrudes to both sides of the supporting part P2.

The pressing part P1 is formed extending along the longitudinal direction of the first side beam 430a, as shown in FIG. 7, and presses the upper portion of the adjacent cell stack 410 along the length direction of the cell stack assembly 400.

The first side beam 430a and the second side beam 430b each include protrusion parts 431a, 431b projecting to form a step along the height direction of the cell stack 410.

The protrusion parts 431a, 431b may be divided into an upper protrusion part 431a formed on an upper portion of the side beams 430a, 430b and a lower protrusion part 431b formed on a lower portion of the side beams 430a, 430b.

The first side beam 430a includes the upper protrusion part 431a, and the second side beam 430b includes the lower protrusion part 431b.

The first side beam 430a and the second side beam 430b have a shape in which the upper protrusion part 431a and the lower protrusion part 431b are engaged and coupled with each other.

### Battery Pack

The battery pack of the present invention is characterized in that it includes a cell stack assembly 400 having a first side beam 430a on one side, including a pressing part P1 shaped to press the top of the cell stack 410.

### (First embodiment)

FIG. 9 is a perspective view of a battery pack according to a first embodiment of the present invention.

The battery pack includes a pack case 1000 that provides a space in which a plurality of cell stack assemblies 400 are seated, as shown in FIG. 9.

The pack case 1000 includes a base plate 100 that supports a lower portion of the cell stack assembly 400, side walls 200 that are coupled along a rim of the base plate 100 to support a side portion of each cell stack assembly 400, and a main wall 300 that is coupled to the base plate 100 across the center of the pack case 1000.

The main wall 300 is formed to extend along a length direction of the pack case 1000 and is coupled to the base plate 100 such that the inner space of the pack case 1000 is largely divided into two.

The cell stack assembly 400 of the plurality of cell stacks is disposed on either side of the main wall 300 and seated on the base plate 100. The cell stack assembly 400 is disposed such that each cell stack assembly 400 has side beams 430a, 430b provided on its side portions to be engaged and coupled with each other.

Specifically, a pair of cell stack assemblies 400 disposed adjacent to each other are seated in the pack case 1000 such that a first side beam 430a of one of the cell stack assemblies 400 engages a second side beam 430b of the other of the cell stack assemblies 400. Thus, a pressing part P1 of the first side beam 430a included in the pair of cell stack assemblies 400 supports the upper portion of the pair of cell stacks 410 located on each side.

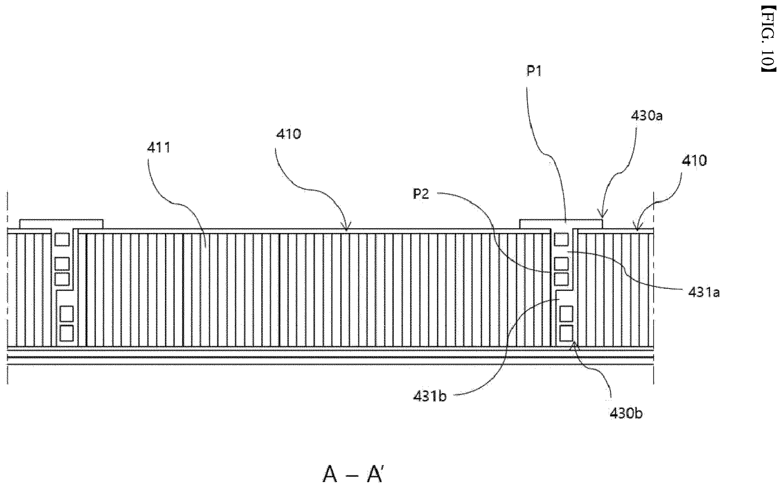

FIG. 10 is a cut-away cross-sectional view of a portion of the pack case 1000 of the FIG. 9.

According to FIG. 10, a first side beam 430a on one side of one cell stack assembly 400 is engaged with a second side beam 430b on one side of another neighboring cell stack assembly 400 in an engaging manner. Further, a pressing part P1 of the top of the first side beam 430a supports and presses the upper portion of a cell stack 410 located on both sides of the coupled first side beam 430a and the second side beam 430b.

Specifically, the pressing part P1 is formed on the top of the supporting part P2 in a shape that protrudes to both sides of the supporting part P2, and presses the upper portion of a cell stack 410 included in the cell stack assembly 400 including the supporting part P2 with a protrusion part to one side of said supporting part P2, pressing the upper portion of a cell stack 410 included in another cell stack assembly 400 disposed adjacent to said supporting part P2 with a protrusion part to the other side of the supporting part P2.

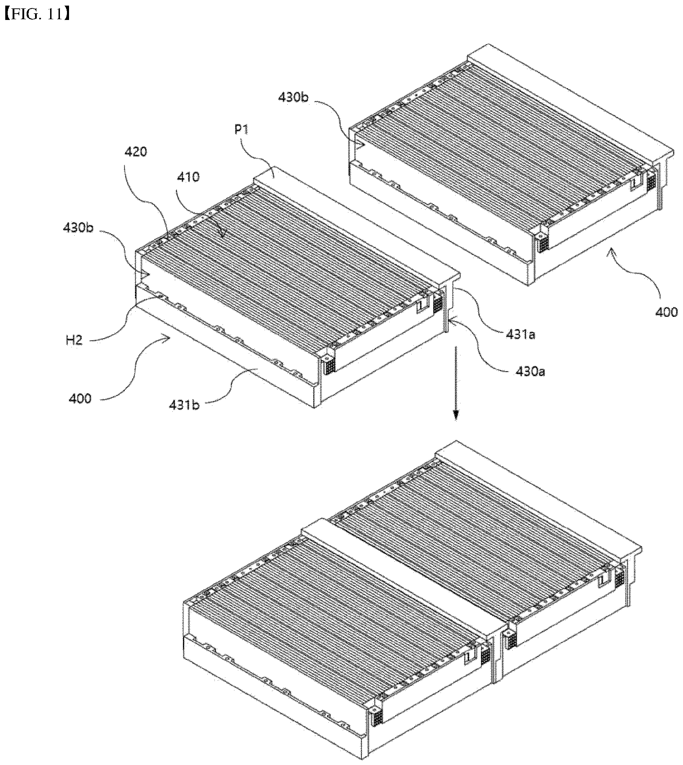

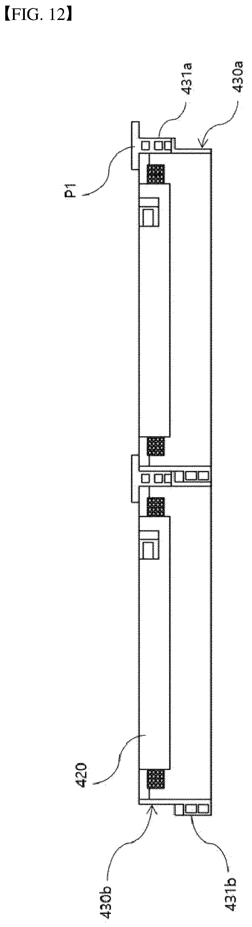

FIG. 11 illustrates the coupling of a pair of neighboring disposed cell stack assemblies 400 in the pack case 1000 of FIG. 9, and FIG. 12 illustrates a front view of the pair of cell stack assemblies 400 coupled in FIG. 11.

The first side beam 430a included in any one of the cell stack assemblies 400 is coupled with the second side beam 430b such that the pressing part P1 covers the second side beam 430b of the other cell stack assembly 400, as shown in FIGS. 11 and 12. Thus, the pressing part P1 between the pair of cell stack assemblies 400 supports and presses the upper portions of the two neighboring cell stacks 410.

Thus, the upper portions of the two cell stacks 410 can be stably supported by the one pressing part P1 including the first side beam 430a.

### (Second embodiment)

The battery pack of the present invention may also be screwed by a first side beam 430a included in either cell stack assembly 400 to a busbar frame 420 of another neighboring cell stack assembly 400.

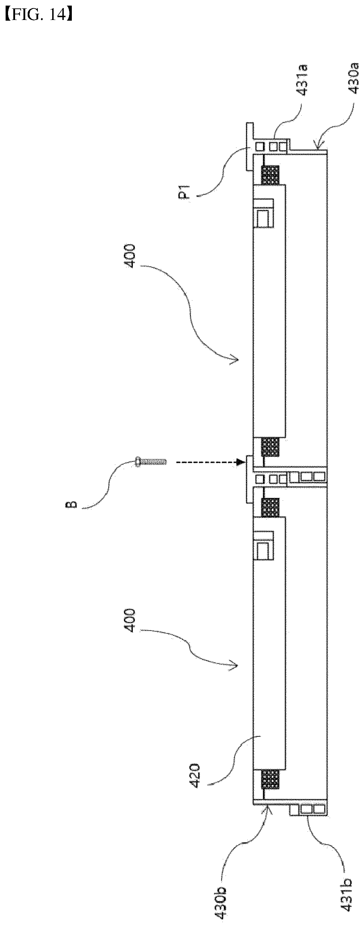

FIG. 13 is a perspective view of a pair of cell stack assemblies 400 neighborly accommodated in a battery pack according to a second embodiment of the present invention, and FIG. 14 is a front view of the cell stack assembly 400 of FIG. 13.

Referring to FIGS. 13 and 14 above, the pressing part P1 included in one of the cell stack assemblies 400 of the pair of neighboring cell stack assemblies 400 is coupled to the busbar frame 420 included in the other of the cell stack assemblies 400 by a coupling member B, such as a bolt, etc.

The pressing part P1 includes a screw hole H1 at a position corresponding to the top of the busbar frame 420 of an adjacent other cell stack assembly 400, and the busbar frame 420 of the other cell stack assembly 400 also includes a screw groove (not shown) at a position corresponding to the screw hole H1. Accordingly, the first side beam 430a including the pressing part P1 is fixed to the other cell stack assembly 400 and to each other by a coupling member B that passes through the screw hole H1 and is screwed to the screw groove in the busbar frame 420.

The battery pack of the present invention may also have a coupling member B coupled to each corner of said pressing part P1 to secure a more stable supporting force by said pressing part P1.

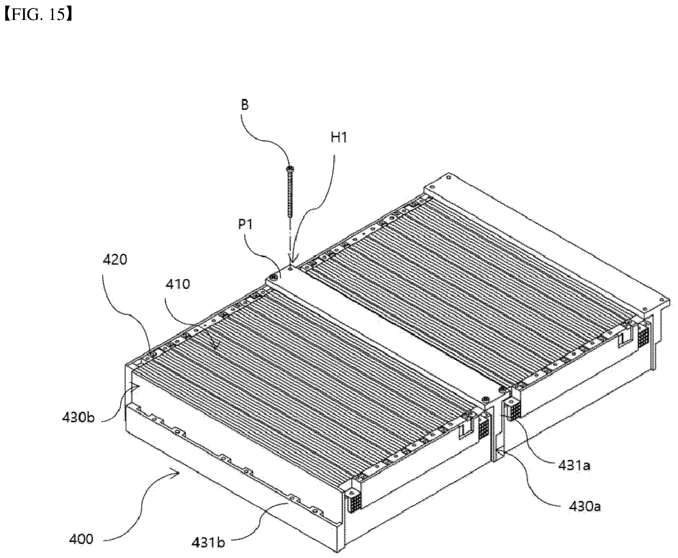

FIG. 15 is a variant of FIG. 13, according to which a screw hole H1 is formed at each corner of the pressing part P1, and four coupling members B are coupled to each screw hole H1. In this case, the coupling members (B) inserted into the screw holes (H1) formed at the front end of the pressing part (P1) are screwed to the busbar frame (420) located at the front end of the pair of cell stack assemblies (400), and the coupling members (B) inserted into the screw holes (H1) formed at the rear end of the pressing part (P1) are screwed to the busbar frame (420) located at the rear end of the pair of cell stack assemblies (400).

### (Third embodiment)

The cell stack assembly 400 of the battery pack of the present invention may comprise a pair of neighboring cell stack assemblies 400 that are engaged and coupled to each other by a coupling member B that passes through two side beams 430a, 430b at once.

FIG. 16 is a perspective view of a pair of cell stack assemblies 400 included in a battery pack according to a third embodiment of the present invention.

Referring to FIG. 16, the first side beam 430a and the second side beam 430b include coupling holes H2 formed to vertically pass through the protrusion parts 431a, 431b, and a pair of neighboring cell stack assemblies 400 are coupled such that the locations of the coupling holes H2 included in the first side beam 430a of one of the cell stack assemblies 400 and the coupling holes H2 included in the second side beam 430b of the other of the cell stack assemblies 400 are matched

The coupled pair of cell stack assembly 400 is screwed to the other by a coupling member B, such as a bolt, etc., which simultaneously passes through the coupling holes H2 of the first side beam 430a and the second side beam 430b coupled to the first side beam 430a.

### (Fourth embodiment)

The battery pack of the present invention may have a buffer pad 500 interposed between the pressing part P1 and the cell stack 410 to mitigate an impact or the like transmitted from the pressing part P1 supporting and pressing the upper portion of the cell stack 410.

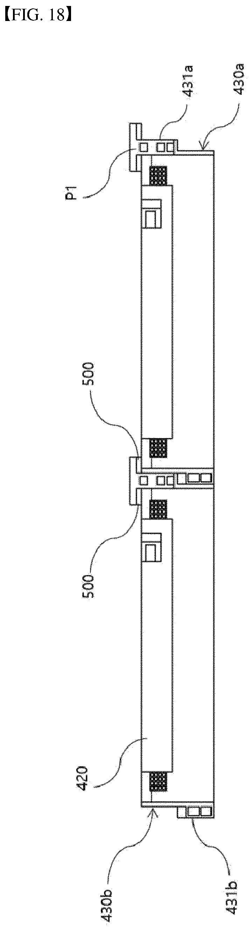

FIG. 17 is a front view of a cell stack assembly 400 included in a battery pack according to a fourth embodiment of the present invention, and FIG. 18 is a front view of a pair of cell stack assemblies 400 coupled to each other.

Referring to FIG. 17, a buffer pad 500 is attached to the bottom of the pressing part P1 of the first side beam 430a. The buffer pad 500 is used for the purpose of preventing the pressing part P1 of the first side beam 430a from directly contacting the cell stack 410 and transmitting an impact, and for improving the supporting force of the pressing part P1.

The buffer pad 500 may generally include a material capable of absorbing shock. For example, the buffer pad 500 may be made of polyurethane or the like, and the pressure of the pressing part P1 is transmitted to the top of the cell stack 410 through the buffer pad 500.

As above, the present invention has been described in more detail through the drawings and embodiments. However, since the configuration described in the drawings or embodiments described herein is merely one embodiment of the present invention and do not represent the overall technical spirit of the invention, it should be understood that the invention covers various equivalents, modifications, and substitutions at the time of filing of this application.

### [Description of Reference Numerals]

10: (conventional art) cell stack assembly
20: (conventional art) cell stack
30: (conventional art) cell
40: (conventional art) side beam
40a: (conventional art) first side beam
40b: (conventional art) second side beam
41: (conventional art) protrusion part
50: (conventional art) busbar frame
60: (conventional art) pack case
70: (conventional art) base plate
80: (conventional art) side wall
90: (conventional art) main wall
1000: pack case
100: base plate
200: side wall
300: main wall
400: cell stack assembly
410: cell stack
411: cell
420: busbar frame
430a: first side beam
430b: second side beam
431a: upper protrusion part
431b: lower protrusion part
500: buffer pad
B: coupling member
P1: pressing part
P2: supporting part
H1: screw hole
H2: coupling hole

## Claims

1. A cell stack assembly comprising:
a cell stack having a plurality of cells stacked with electrode leads extending from both sides thereof;
a busbar frame including a busbar electrically connected with each of the electrode leads, and attached to a front and rear surface of the cell stack, respectively;
a first side beam coupled to one side end of the busbar frame to support one side surface of the cell stack; and
a second side beam coupled to other side end of the busbar frame to support one side surface of the cell stack;
wherein the first side beam comprises a supporting part supporting side portion of the cell stack; and a pressing part pressing the upper portion of the cell stack.

2. The cell stack assembly of claim 1, wherein a supporting part supporting one side of the cell stack; and a plate-shaped pressing part formed at an end of the supporting part and perpendicular to the supporting part.

3. The cell stack assembly of claim 1, wherein the pressing part is formed on the top of the supporting part, and the cross-section of the first side beam may have a 'T' shape.

4. The cell stack assembly of claim 1, wherein the pressing part is formed at an end of the supporting part in a shape that protrudes to both sides of the supporting part.

5. The cell stack assembly of claim 1, wherein the pressing part is formed extending along a length direction of the first side beam.

6. The cell stack assembly of claim 1, wherein the first side beam and the second side beam comprise protrusion parts projecting to form a step along the height direction of the cell stack.

7. The cell stack assembly of claim 6, wherein the protrusion part comprises an upper protrusion part formed on an upper portion of the first side beam; and a lower protrusion part formed on a lower portion of the second side beam.

8. The cell stack assembly of claim 7, wherein the first side beam and the second side beam have a shape such that the upper protrusion part and the lower protrusion part are engaged and coupled with each other.

9. A battery pack accommodating the cell stack assembly of claim 1,
A battery pack comprising:
a pack case providing a space in which the cell stack assembly is seated; and
a pair of cell stack assemblies disposed adjacent to each other, **characterized in that** a first side beam of one of the cell stack assemblies is seated in the pack case such that a second side beam of the other of the cell stack assemblies is coupled to the first side beam.

10. The battery pack of claim 9, wherein a pressing part of the first side beam included in the pair of cell stack assemblies supports a pair of cell stack upper portion located on each side of the first side beam.

11. The battery pack of claim 10, wherein
the pressing part is formed on a top of the supporting part with protrusions on both sides of the supporting part,
the pressing part presses the upper portion of a cell stack included in the cell stack assembly comprising the supporting part with a protrusion on one side of the supporting part, and the pressing part may press the upper portion of a cell stack included in another cell stack assembly disposed adjacent to the supporting part with a protrusion on the other side of the supporting part.

12. The battery pack of claim 10, wherein the pressing part included in one of the cell stack assemblies of the pair of neighboring disposed cell stack assemblies may be screwed to a busbar frame included in the other cell stack assembly.

13. The battery pack of claim 9, wherein
the first side beam and the second side beam comprise coupling holes formed to pass through the protrusion part in a vertical direction, and
any pair of neighboring cell stack assemblies is coupled such that the locations of the coupling holes included in the first side beam of one cell stack assembly and the coupling holes included in the second side beam of the other cell stack assembly are matched.

14. The battery pack of claim 13, wherein the coupled pair of cell stack assemblies is screwed by a coupling member through the coupling holes in the first side beam and the second side beam coupled to the first side beam.

15. The battery pack of claim 9, wherein a buffer pad is attached to the bottom of the pressing part of the first side beam.
